(19) Europäisches Patentamt
European Patent Office
Office européen des brevets

(11) **EP 2 381 095 A1**

(12) **EUROPEAN PATENT APPLICATION**

(43) Date of publication:
**26.10.2011 Bulletin 2011/43**

(51) Int Cl.:
*F03D 7/02* *(2006.01)*   *F03D 11/00* *(2006.01)*

(21) Application number: **10161054.1**

(22) Date of filing: **26.04.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS**<br><br>(71) Applicant: **Vestas Wind Systems A/S**<br>**8940 Randers - SV (DK)** | (72) Inventor: **Frederiksen, Thomas**<br>**8920, Randers NV (DK)**<br><br>(74) Representative: **Samson & Partner**<br>**Widenmayerstrasse 5**<br>**80538 München (DE)** |

(54) **Rotational positioning drive in a wind turbine**

(57)    Rotational positioning drive in a wind turbine, comprising a motor device (60, 70) and a gearing with a rotational input (44, 45) coupled to the motor device (60, 70), and a rotational output (46) coupled to an element (13; 29) of the wind turbine (1), the element (13; 29) to be positioned rotationally, wherein the motor device (60, 70) comprises at least one first motor (60) and at least one second motor (70), and the gearing (40) is an epicyclical gearing having a sun gear (41), a planet gear unit (42, 43) and an outer ring gear (44), wherein the first and second motors (60, 70) are coupled to a first one and a second one of the sun gear (41), the planet gear unit (42, 43) and the outer ring gear (44), and the third one of the sun gear (41), the planet gear unit (42, 43) and the outer ring gear (44) provides the rotational output (46) coupled to the element (13; 29) to be rotationally positioned.

*Fig. 3*

EP 2 381 095 A1

**Description**

BACKGROUND OF THE INVENTION

The invention relates to a rotational positioning drive in a wind turbine.

DESCRIPTION OF THE RELATED ART

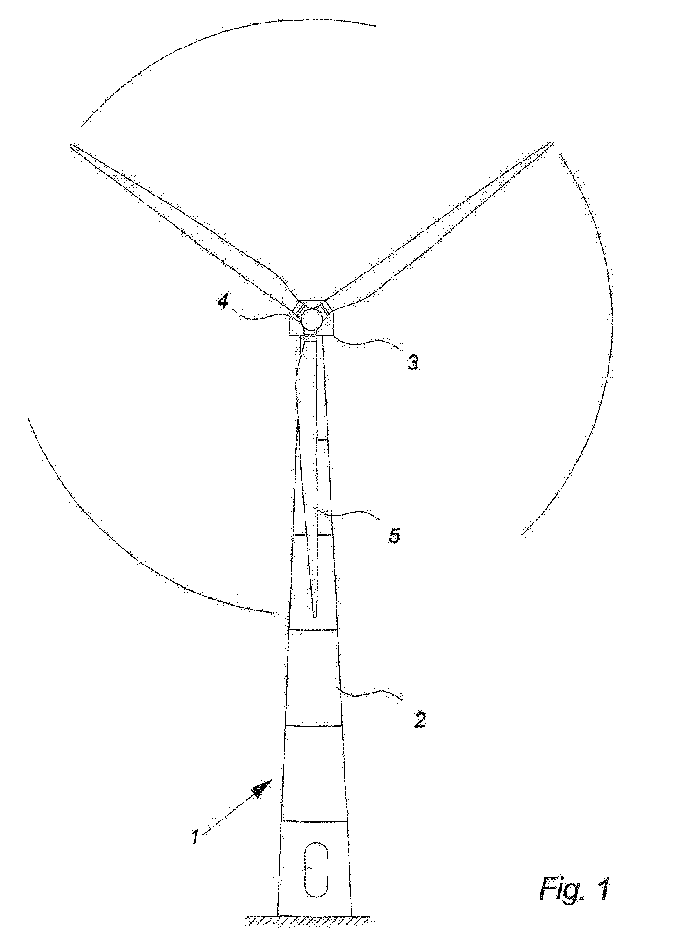

A typical wind turbine as known in the art, comprises a tapered wind turbine tower and a wind turbine nacelle positioned on top of the tower. A wind turbine rotor with a number of wind turbine blades is connected to the nacelle through a low speed shaft, which extends out of the nacelle front, as illustrated in Fig. 1. The wind turbine nacelle is mounted on top of the tower to be able for rotation around a vertical axis, i.e. in the azimuthal direction, which is called yawing, so that the nacelle can follow the direction of wind or can be brought in a specially defined position with reference to the wind direction under given circumstances. The wind turbine blades are arranged so that the pitch of each blade, i.e. the inclination of the profile of the same with respect to the actual wind direction and speed can be adjusted or controlled. A pitch can be kept constant or can be varied during one rotation of the rotor, the latter for adapting to the wind speed varying with the distance from the ground.

A typical modem wind turbine according to the state of the art is described in WO 2009/068036 A2. For yaw control, the same comprises a yaw mechanism with one or more yaw motors, i.e. rotational positioning drives, and a yaw bearing, which forms a rotatable connection between the wind turbine tower and the nacelle. The yaw motor or motors are cooperating with a toothed ring fixedly connected to the top of the tower, by a pinion gear. Other wind turbine yawing systems are known from EP 1 571 334 A1 or from WO 2008/053017 A3.

Further, it is known from DE 37 22 022 C1 to use a rotational positioning drive in a wind turbine, e.g. for pitch control of the rotor blades, wherein two separate motors are coupled to the element to be positioned, i.e. the wind turbine blade, by means of a differential gear. The motors are coupled to the differential gear by respective worm gears, the latter having self-jamming effects on the motors when not energized.

The object of the present invention is to provide for an improved rotational positioning drive in a wind turbine, especially for yawing control or pitch control.

SUMMARY OF THE INVENTION

The invention provides for a rotational positioning drive in a wind turbine, comprising a motor device and a gearing with a rotational input coupled to the motor device, and a rotational output coupled to an element of the wind turbine, the element to be positioned rotationally. According to the invention, the motor device comprises at least one first motor and at least one second motor, and the gearing is an epicyclical gearing having a sun gear, a planet gear unit and an outer ring gear, wherein the first and second motors are coupled to a first one and a second one of the sun gear, the planet gear unit and the outer ring gear, and the third one of the sun gear, the planet gear unit and the outer ring gear provides the rotational output coupled to the element to be rotationally positioned.

Further aspects of the invention are set forth in the dependent claims, the following description and the drawings.

BRIEF DESCRIPTION OF THE DRAWINGS

Embodiments of the present invention are explained by way of example with respect to the accompanying drawings, in which:

Fig. 1  illustrates a large modem wind turbine according to the state of the art, as seen from the front,

Fig. 2  shows a simplified cross section of a wind turbine nacelle, as seen from the side,

Fig. 3  shows a cross section of a rotational positioning drive in a wind turbine, according to one embodiment of the invention, in which an epicyclical gear is used as a differential gearing for coupling two motors at an input side of the gearing to the output side of the same,

Fig. 4  illustrates schematically an epicyclical gearing, and

Fig. 5  is a simplified block diagram showing the essential functional elements of a rotational positioning device according to one embodiment of the invention.

DETAILED DESCRIPTION OF EMBODIMENTS

Fig. 1 is illustrating a large wind turbine according to the state of art, as indicated by reference numeral 1. The wind turbine 1 comprises a tower 2 and a wind turbine nacelle 3 which is positioned on top of the tower 2. A wind turbine rotor 4, comprising three wind turbine blades 5, is connected to the nacelle 3 through a low speed shaft extending out of the nacelle 3 by a rotor hub 14.

Before proceeding further with a detailed description of the embodiments of the invention, some general aspects of the rotational positioning drive are discussed. The rotational positioning drive comprises a motor device having at least one first motor and at least one second motor. In different embodiments, the first and second motors are either used in combination, alternatively or as parts of a redundant system. In other embodiments one motor is used for higher rotation speeds and one for lower rotation speeds, in still other embodiments one motor is used for lower rotation torques and one is used for higher rotation torques. In one embodiment the motor device includes only one first motor and only one second motor, in another embodiment the motor device includes a plurality of first and/or second motors.

The rotational positioning drive further comprises an epicyclical gearing with a rotational input coupled to the motor device, and a rotational output coupled to an element of the wind turbine, the element to be positioned rotationally. The epicyclical gearing has a sun gear, a planet gear unit and an outer ring gear. The first and second motors are coupled to a first one and a second one of the sun gear, the planet gear unit and the outer ring gear, and the third one of them provides the rotational output coupled to the element to be rotationally positioned. In one embodiment one of the first and second motors is used for producing rotation of the rotational output in the one direction, whereas the other one is used for rotation of the rotational output in the other direction.

In one embodiment, the first and second motors are coupled to the sun gear and to the ring gear, respectively, wherein the planet gear unit provides the rotational output coupled to the element to be rotationally positioned.

In one embodiment, the rotational positioning drive comprises brake means coupled for selectively inhibiting the first and/or second motor.

In one embodiment, the first and second motors are provided in line on coaxially arranged input shafts, in particular of the sun gear and the ring gear, and in particular on the same side, of the epicyclical gear.

In one embodiment, the element to be positioned rotationally, is coupled to a planet gear unit shaft of the epicyclical gear, which is arranged coaxially with the sun gear shaft and the ring gear shaft.

In one embodiment, the rotational positioning drive is included in a yawing system for yaw control of the wind turbine. In another embodiment, the rotational positioning drive is included in a pitch control system for pitch control of the wind turbine blades.

In one embodiment, a speed reducer gear is arranged between the epicyclical gear, i.e. the output of the same, and the element to be positioned.

Referring now to Fig. 1, according to one embodiment, the wind turbine rotor 4 comprises three rotor blades 5, mounted to the hub 14, but in other embodiments, the wind turbine rotor 4 might comprise another number of blades 5, such as two, four or more blades.

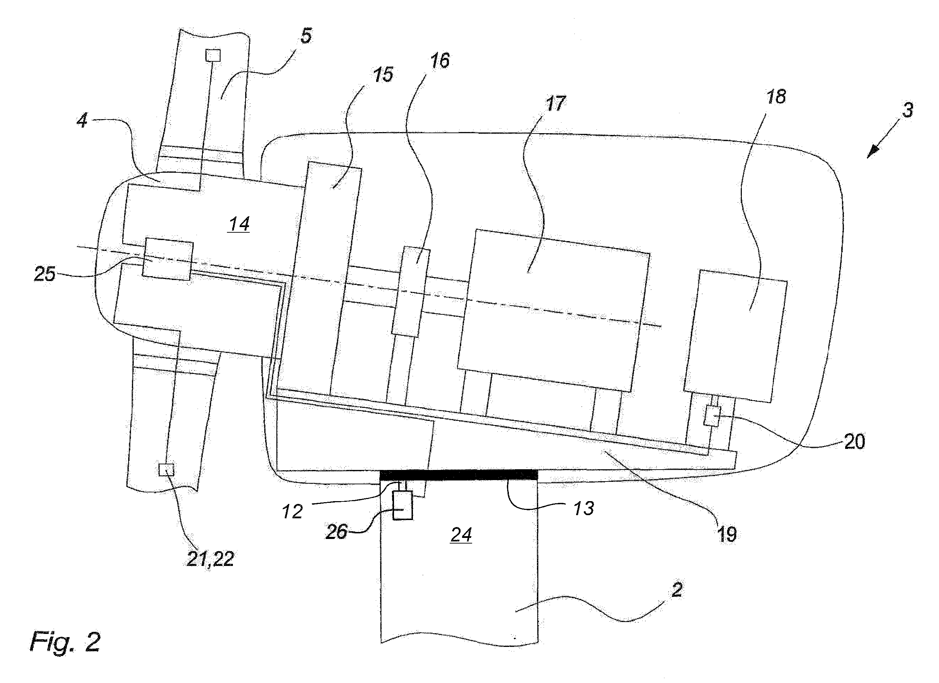

Fig. 2 is showing a simplified cross section of the nacelle 3 of a so called pitch regulated wind turbine 1, as seen from the side. In the state of the art, nacelles 3 are existing in a multitude of variations and configurations, but typically, a drive train in the nacelle 3, following the low speed shaft to which the wind turbine rotor 4 is fixed, comprises one or more of the following components: a gear 15 for changing the (low) rotational speed of the rotor 4 to an elevated rotational speed, some sort of braking system 16, and a generator 17 for converting the mechanical energy provided from the wind turbine rotor 4 to electrical energy. Further, the nacelle 3 of a modem wind turbine 1 might also include a converter (or inverter) 18 for converting the electrical energy output from the generator 17 to a voltage with appropriate amplitude, frequency and phase for complying with the electrical grid requirements. Further included in the nacelle 3 might be additional peripheral equipment, such as further power handling equipment, control equipment, hydraulic systems, cooling systems and more.

The weight of the entire nacelle 3, including the nacelle components 15, 16, 17, 18, is carried by a strengthening structure 19. The above described components 15, 16, 17, 18 usually are placed on and/or connected to such a common load carrying structure 19. In the shown simplified embodiment, the strengthening structure 19 only extends along the bottom of the nacelle 3, e.g. in form of a bed frame, to which some or all the components 15, 16, 17, 18 are connected. In other embodiments, the strengthening structure 19 might comprise a so called gear bell transferring the load from the rotor hub 14 directly to the tower 2, or the load carrying structure 19 might comprise several interconnected parts, such as in a lattice work.

In the shown embodiment, the drive train of the nacelle 3 is arranged in an angle relatively to a horizontal plane, e.g. for ensuring that the rotor blades 5 do not hit the tower 2, for compensating for differences in wind speed at the top and the bottom of the wind turbine rotor 4, and for other reasons.

Most embodiments of modem wind turbines use so called forced yawing, i.e. for controlling the direction or orientation of the nacelle 3 and, consequently, the axis of the wind turbine rotor 4, in the azimuthal direction, i.e. around the vertical axis of the tower 2 and, consequently, relative to the wind direction. They make use of a yaw controlling system, which includes control means 25 and a yaw mechanism 24. The yaw mechanism 24, typically, includes one or more electric motors and gear boxes to keep the rotor yawed against the wind by rotating the nacelle 3 on the top of the tower 2.

The yaw mechanism 24 shown in Fig. 2 comprises a yaw positioning drive 26 which is cooperating with a toothed ring 13 by means of a pinion gear 12, all those components illustrated in Fig. 2 in a simplified manner.

Typically, the yaw mechanism 24 comprises one or more such yaw motors, a yaw bearing, and yaw brakes, e.g. to brake the yaw mechanism, whenever it is not in use. The yaw mechanism is activated by the control means 25, which is, only for the purpose of example, in the embodiment of Fig. 2, shown as included in the rotor hub 14, for controlling the yaw angle or the yaw position, e.g. on the basis of a position feedback signal from some position sensor means. Instead of being placed in the hub 14 of the rotor 4, in other embodiments, the control means 25 might be placed in the nacelle 3, in the tower 2, or at another appropriate place.

The wind turbine plates 5 of the rotor 4 are connected to the hub 14 pivotably around the longitudinal axis of the blades 5, i.e. in such a way to enable variation of the blade pitch relatively to the wind. This includes a feathered position, i.e. a parking position, where the blade 5 is pitched so that the chord of the aerodynamic profile of the same is substantially parallel with the incoming wind. For protective purposes, if the wind speed of the incoming wind increases above a certain level, such as e.g. 25 meters/sec, the controller 25 will feather the blades 5 to make the rotor 4 stop rotating, or at least make the rotor 4 idle, and the wind turbine will substantially stop producing power to the utility grid. This is, among other reasons, for protecting the blades 5 and the other components of the wind turbine 1 from damaging overloads at high wind speeds. The pitch control of the rotor blades 5 is performed by pitch positioning drives 21, 22, which in Fig. 2, for the sake of simplicity and as an example only, are shown near the route 29 of the blades 5. As well-known in the art, pitch positioning drives may be embodied in different ways, e.g. by a single drive or actuator located in the nacelle and coupled by means of a so called spider drive and cantilever arms from the hub 14 into each blade. However, according to one embodiment a separate pitch positioning drive is provided for each blade, e.g. including a pinion gear meshing with a toothed inner ring of a pitch bearing connected with the blade, similar as in the above described yawing mechanism.

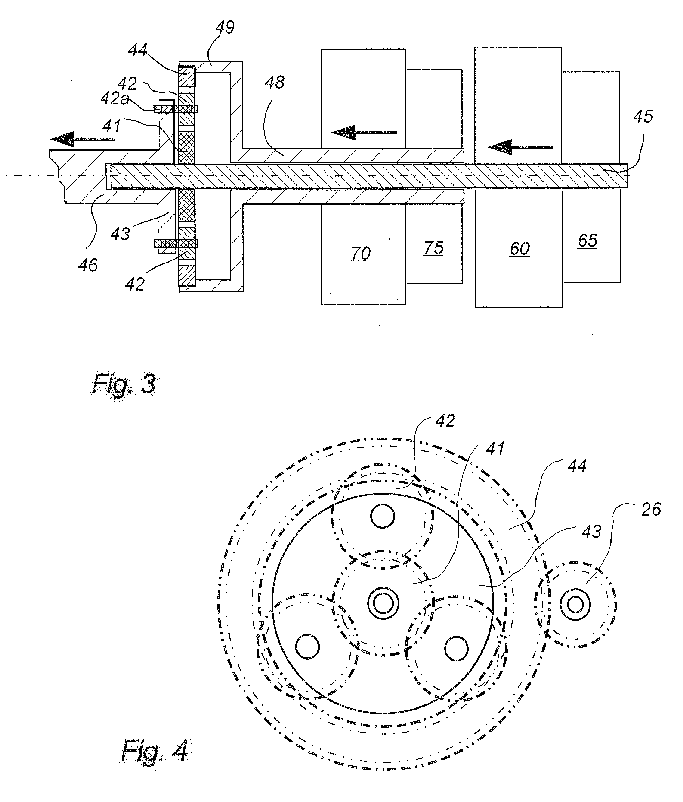

One embodiment of a rotational positioning drive according to the present invention, which is adapted for yaw control or pitch control in a wind turbine, is schematically shown in Fig. 3 and further illustrated by Fig. 4.

The rotational positioning drive shown in Fig. 3 comprises a motor device, which includes a first motor 60 and a second motor 70, and a gearing 40 having a rotational input 45, 48 coupled to the motors 60, 70, and a rotational output 46 to be coupled to the element of the wind turbine 1, which is to be positioned rotationally, i.e. in the yawing control system or in the pitch control system.

The gearing 40 is an epicyclical gearing having a sun gear 41, a planet gear unit including a number of planet gears 42 and a planet gear carrier 43, and an outer ring gear 44, as also exemplified in Fig. 4.

An epicyclical gearing, per se, is well known in the art, one essential feature of the same is that it comprises three gearing elements meshing with one another, i.e. the sun gear 41, the planet gears 42 and the outer ring gear 44, which can be used for different types of operation of the epicyclical gearing, namely for change of rotational speed, for distribution of torques, or performing the function of a differential gearing. One essential formula, which is showing the relationship between the rotational movement of the respective elements, is the equation:

$$N_{sun} \cdot \omega_{sun} + N_{ring} \cdot \omega_{ring} = (N_{ring} + N_{sun}) \cdot \omega_{planet}$$

wherein N is the number of teeth and $\omega$ is the angular velocity of the respective element (sun gear, planet gear unit or ring gear). Because angular velocity and rpm are directly proportional, the same equation applies for rpm of the respective elements.

The above equation shows that the angular velocities of the sun gear 41, the planet gear unit 42, 43 and the ring gear 44 are not dependent on the number of teeth $N_{planet}$ of the planet gears 42. However, it should be made sure that

$$N_{sun} + 2 \cdot N_{planet} = N_{ring}$$

wherein N is again the number of teeth of the respective elements, so that the gears will fit, i.e. will be meshing, because N is directly proportional to the diameter of the respective element.

As Fig. 3 shows, the first motor 60 is coupled to the sun gear 41 by the sun gear shaft 45, whereas the second motor 70 is coupled to the ring gear 44 by a ring gear shaft 48 and a ring gear retainer 49 connecting those two elements fixedly. On the other hand, the output of the drive is constituted by a planet gear unit shaft 46, which is fixedly coupled to the planet gear carrier or arm 43, to which the planet gears 42 are rotatably connected by planet gear pins 42a at their axes.

The rotational positioning drive shown in Fig. 3 further comprises brake means 65, 75, which are, respectively, coupled to the first and second motors 60, 70 or the respective shafts 45, 48, for selectively inhibiting rotation of the first and/or the second motor 60, 70, i.e. the sun gear 41 coupled to the first motor 60 and/or ring gear 44 coupled to the second motor 70.

That means, according to the above equation, the angular velocity of the output shaft 46 coupled to the planet gear carrier arm 43, is

$$\omega_{planet} = (N_{sun} \cdot \omega_{sun} + N_{ring} \cdot \omega_{ring})/(N_{ring} + N_{sun}).$$

It should be kept in mind that a clockwise rotation of the sun gear 41 also results in a clockwise rotation of the planet gear unit 42, 43, when the outer ring gear 44 is kept fixed, as illustrated in Fig. 4, and that a clockwise rotation of the ring gear 44 also causes a clockwise rotation of the planet gear unit 42, 43, when the sun gear 41 is kept fixed.

As to be seen in Fig. 3, the first and second motors 60, 70 are provided in line on the coaxially arranged input shafts, i.e. the sun gear shaft 45 and the ring gear shaft 48 of the epicyclical gear 50.

Further, in the shown embodiment, the first and second motors 60, 70 both are provided on the same side of the epicyclical gear 40 as the input side of the same, whereas the output, i.e. the planet gear unit shaft 46 is provided on the opposite side.

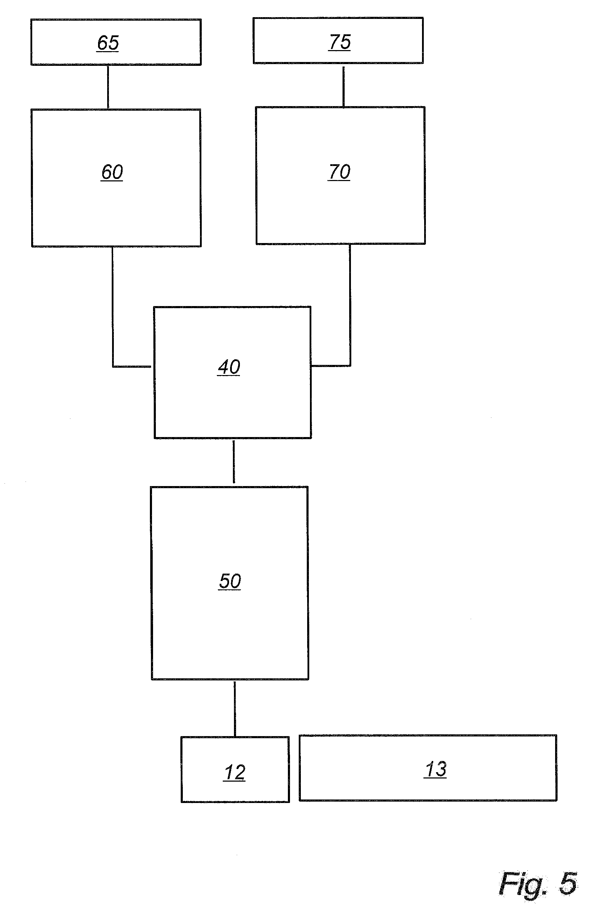

Fig. 5 shows a simplified block diagram of the rotational positioning drive of the invention, showing the first motor 60 and the second motor 70 as independent input drive sources coupled to the epicyclical gearing 40, which is functioning as a differential gearing. The output of the epicyclical differential gearing 40 is coupled by means of a speed reducer gear 50, the same being not shown in Fig. 3 for the sake of simplicity, to a pinion gear 12 meshing with a toothed ring 13. The pinion gear 12 and the toothed ring 13 may form a part of the yawing control system or the pitch control system as described above with reference to Fig. 2.

Each of the first and second motors 60, 70 can be inhibited in its rotation by the respective brakes or brake means 65, 75.

## Claims

1. Rotational positioning drive in a wind turbine, comprising a motor device (60, 70) and a gearing with a rotational input (44, 45) coupled to the motor device (60, 70), and a rotational output (46) coupled to an element (13; 29) of the wind turbine (1), the element (13; 29) to be positioned rotationally, wherein the motor device (60, 70) comprises at least one first motor (60) and at least one second motor (70), **characterized in that,** the gearing (40) is an epicyclical gearing having a sun gear (41), a planet gear unit (42, 43) and an outer ring gear (44), wherein the first and second motors (60, 70) are coupled to a first one and a second one of the sun gear (41), the planet gear unit (42, 43) and the outer ring gear (44), and the third one of the sun gear (41), the planet gear unit (42, 43) and the outer ring gear (44) provides the rotational output (46) coupled to the element (13; 29) to be rotationally positioned.

2. Rotational positioning drive of claim 1, wherein the first and second motors (60, 70) are coupled to the sun gear (41) and to the ring gear (44), respectively, wherein the planet gear unit (42, 43) provides the rotational output (46) coupled to the element (13; 29) to be rotationally positioned.

3. Rotational positioning drive of claim 1 or 2, wherein the rotational positioning drive comprises brake means (65, 75) are coupled for selectively inhibiting the first and/or second motor (60, 70).

4. Rotational positioning drive of any one of the preceding claims, wherein the first and second motors (60, 70) are provided in line on coaxially arranged input shafts (45, 48) of the epicyclical gear (40).

5. Rotational positioning drive of claim 4, wherein the first and second motors (60, 70) are provided in line on coaxially arranged input shafts (45, 48) of the sun gear (41) and the ring gear (44) of the epicyclical gear (40).

6. Rotational positioning drive of claim 4 or 5, wherein the first and second motors (60, 70) are both provided on coaxially arranged shafts (45, 48) on the same side of the epicyclical gear (40).

7. Rotational positioning drive of any one of the preceding claims, wherein the element (13; 29) to be positioned rotationally is coupled to a planet gear unit shaft (46) of the epicyclical gear (40), which is arranged coaxially with the sun gear shaft (45) and the ring gear shaft (48).

8. Rotational positioning drive of any one of the preceding claims, wherein the rotational drive (26) is included in a yawing system for yaw control of the wind turbine.

9. Rotational positioning drive of any one of claims 1 to 7, wherein the rotational drive (21, 22) is included in a pitch control system for pitch control of the wind turbine blades (5).

10. Rotational positioning drive of any one of the preceding claims, wherein a speed reducer gear (50) is arranged between the epicyclical gear (40) and the element (13; 29) to be positioned.

*Fig. 1*

*Fig. 2*

EP 2 381 095 A1

**Fig. 3**

**Fig. 4**

*Fig. 5*

Europäisches
Patentamt

European
Patent Office

Office européen
des brevets

**EUROPEAN SEARCH REPORT**

Application Number

EP 10 16 1054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 314 910 A1 (HONEYWELL INT INC [US]) 28 May 2003 (2003-05-28) * paragraph [0004] - paragraph [0010]; claims 1-6; figures 1,4 * | 1-10 | INV. F03D7/02 F03D11/00 |
| X | EP 1 647 708 A1 (GEN ELECTRIC [US]) 19 April 2006 (2006-04-19) * paragraph [0035]; figures 7,9,11 * | 1-10 | |
| X | DE 20 2005 016021 U1 (CA ENGINEERING UND SERVICE GMB [DE]) 8 December 2005 (2005-12-08) * paragraph [0040]; figure 8 * | 1-10 | |
| X | DE 43 44 325 A1 (HEUER DIETER PROF DR ING [DE]) 29 June 1995 (1995-06-29) * figure 1 * | 1 | |
| X | US 5 663 600 A (BAEK KWANG HENRY [US] ET AL) 2 September 1997 (1997-09-02) * figures 1,2 * | 1 | |
| A,D | DE 37 22 022 C1 (MESSERSCHMITT BOELKOW BLOHM) 1 September 1988 (1988-09-01) * figure 1 * | 1-10 | TECHNICAL FIELDS SEARCHED (IPC) F03D |

The present search report has been drawn up for all claims

| Place of search | Date of completion of the search | Examiner |
|---|---|---|
| Munich | 25 November 2010 | Avramidis, Pavlos |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 1054

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2010

| Patent document cited in search report | | Publication date | Patent family member(s) | | Publication date |
|---|---|---|---|---|---|
| EP 1314910 | A1 | 28-05-2003 | AU<br>WO<br>US | 2002356677 A1<br>03044394 A1<br>2004214677 A1 | 10-06-2003<br>30-05-2003<br>28-10-2004 |
| EP 1647708 | A1 | 19-04-2006 | CN<br>US | 1782369 A<br>2006083615 A1 | 07-06-2006<br>20-04-2006 |
| DE 202005016021 | U1 | 08-12-2005 | NONE | | |
| DE 4344325 | A1 | 29-06-1995 | NONE | | |
| US 5663600 | A | 02-09-1997 | NONE | | |
| DE 3722022 | C1 | 01-09-1988 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009068036 A2
- EP 1571334 A1
- WO 2008053017 A3
- DE 3722022 C1